## Europäisches Patentamt
## European Patent Office
## Office européen des brevets

(19)

(11) Publication number: **0 251 771 B1**

(12) ## EUROPEAN PATENT SPECIFICATION

(45) Date of publication of patent specification: **24.04.91**

(51) Int. Cl.5: **C08F 210/06, C08F 4/64**

(21) Application number: **87305797.0**

(22) Date of filing: **30.06.87**

(54) Propylene polymers and their preparation.

(30) Priority: **30.06.86 US 880453**
**30.06.86 US 880456**

(43) Date of publication of application:
**07.01.88 Bulletin 88/01**

(45) Publication of the grant of the patent:
**24.04.91 Bulletin 91/17**

(84) Designated Contracting States:
**AT BE DE ES FR GB IT NL SE**

(56) References cited:
**EP-A- 0 176 641**
**DE-A- 3 007 419**
**DE-A- 3 007 419**

(73) Proprietor: **REXENE PRODUCTS COMPANY (A Delaware Corporation)**
**2400 South Grandview Avenue**
**Odessa Texas 79766(US)**

(72) Inventor: **Allen, George Cyrus**
**16 Tanglewood**
**Odessa, TX 79761(US)**
Inventor: **Pellon, Brian Jay**
**3942 Lyndale Drive**
**Odessa, TX 79762(US)**
Inventor: **Hughes, Michael Peyton**
**2800 Teakwood**
**Odessa, TX 79761(US)**

(74) Representative: **Myerscough, Philip Boyd et al**
**J.A.Kemp & Co. 14, South Square Gray's Inn**
**London, WC1R 5EU(GB)**

Rank Xerox (UK) Business Services

**Description**

In the manufacture of propylene homopolymers and copolymers, conventional polymerization techniques using unsupported catalysts result in the simultaneous production of substantial quantities of atactic polymer in addition to the desired product of high crystallinity and isotacticity. Various methods have been employed for the purification and separation of these two polymers. The by-product, i.e. the atactic polymer of low crystallinity, can be utilized commercially as a component in various adhesive compositions, roofing materials and caulking compounds.

Recently, developments have been made of new catalysts which are highly active and more stereospecific than the conventional catalysts. The proportion of atactic polymer in the polymers produced employing these catalysts is substantially reduced and therefore the polymer product does not generally require any purification for removal of the atactic or low crystalline polymer. Because of the rapid adaptation of existing polymer facilities to the use of these new catalysts, a serious shortage of low crystalline, atactic polymers has arisen.

DE-A-3007419 describes the preparation of low- or non-crystalline terpolymers of propylene, ethylene and a straight chain alpha-olefin of at least 4 carbon atoms using a catalyst comprising a solid component containing titanium and magnesium and an organometallic compound.

The present invention provides a substantially amorphous random copolymer consisting of from 10 wt % to 30 wt % of units derived from ethylene and from 90 to 70 wt % of units derived from propylene, the copolymer having a tacticity index m/r of from 3 to 4 as determined by $^{13}$C NMR spectra.

The tacticity index m/r is determined directly by $^{13}$C Nuclear Magnetic Resonance (NMR). The "m" and "r" describe the stereo-chemistries of pairs of contiguous propylene groups bonded to one or more ethylene groups, "m" referring to meso and "r" to racemic. An m/r value of l.0 describes a syndiotactic polymer and an m/r ratio of 2.0 a truly atactic material. An isotactic material theoretically has a value approaching infinity and many by-product atactic polymers have sufficient isotactic content to have a value of 50 or above. It has been found that the m/r value substantially agrees with the number average sequence length $\bar{n}$ of like groups, i.e. meso and racemic groups in case of propylene homopolymer produced under the same conditions as the random copolymer, except for the absence of ethylene in the feed. Thus, the tacticity is independent of ethylene content in the polymer. Also, the ethylene is distributed throughout the polymer molecule in the most random fashion. The method used in calculating $\bar{n}$ for the homopolymer is disclosed in J.C. Randall, J. POLYM. SCI., POLYM. PHYS. ED., l4, 2083 (l976). The tacticity index m/r is obtained by inverting the r'/m' ratio calculated according to the method devised by H.N. Cheng, MACROMOLECULES, l7, l950 (l984).

The copolymers of the present invention are substantially amorphous though they may exhibit a birefringent spherulitic granular structure when examined by hot stage microscopy. Usually, truly amorphous materials show no structure by this method. The formation of these granules upon cooling implies that there is enough tacticity for short portions of the chain, i.e. ordered arrays of monomer without long range order, which would tend to form crystallites. The average length of the granules is preferably from l5 to 50 micrometers, although occasionally larger grain sizes may be observed. The hot stage microscopy method is described in "The Light Microscopy of Synthetic Polymers", D.A. Helmsley, Oxford University Press, Oxford, England, l984. The determinations are made by heating the samples on glass slides in a hot stage to l70° C and then slowly cooling them by turning off the heaters, while viewing the samples through a crossed polarizer. Photomicrographs (400x) are made of the cooled samples, and measurements are made of the largest dimension (the length) of the granules.

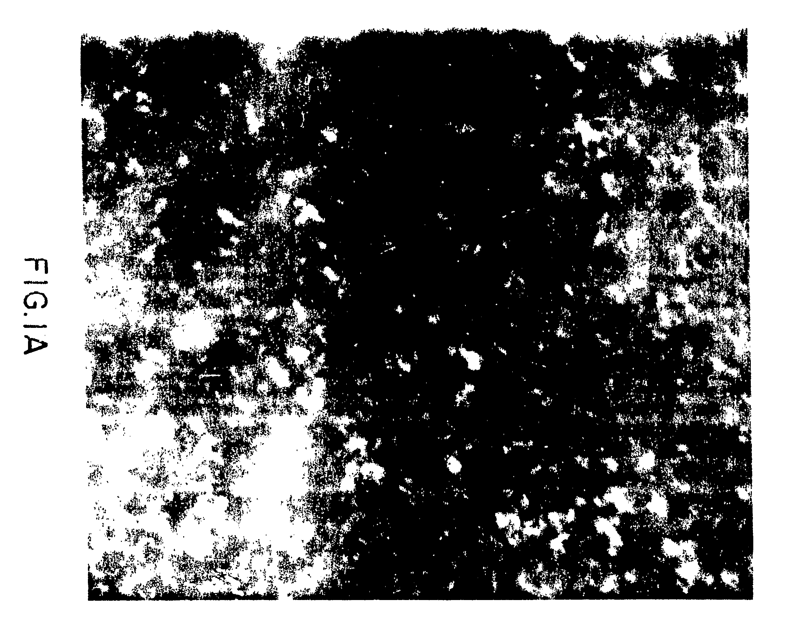

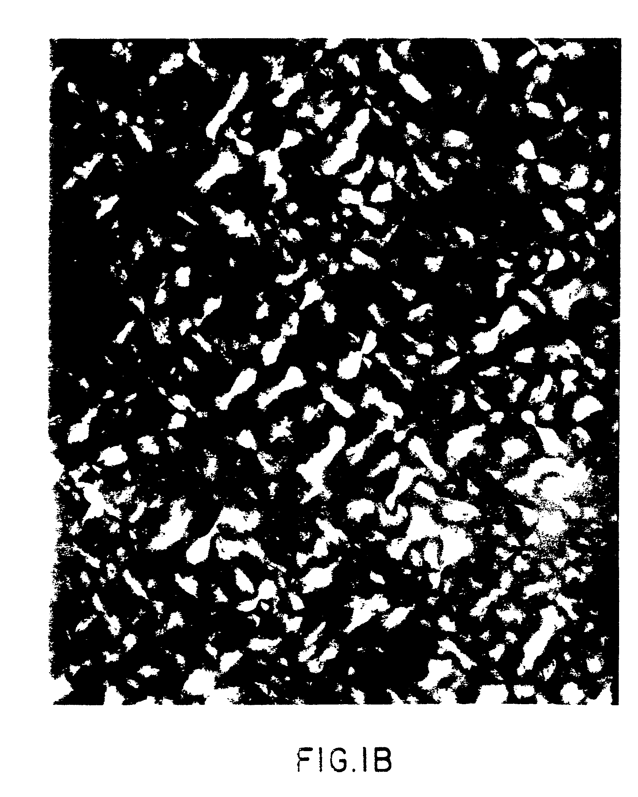

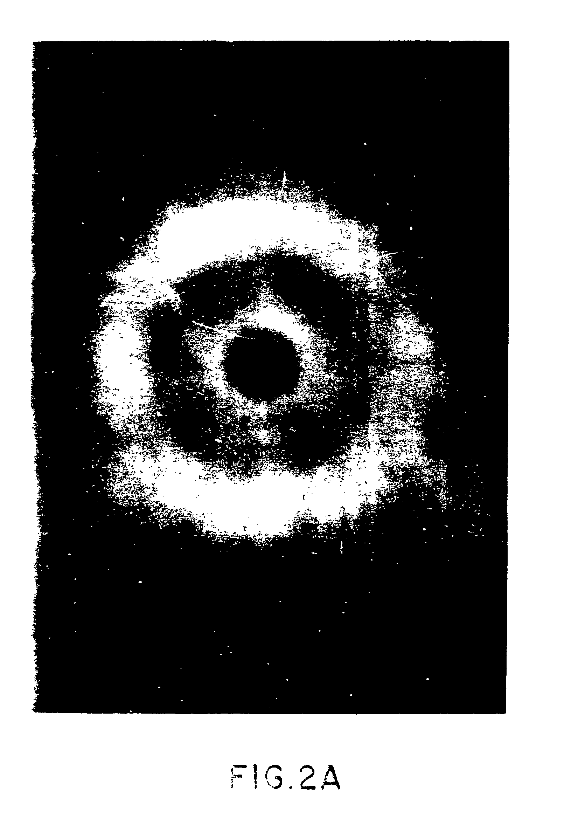

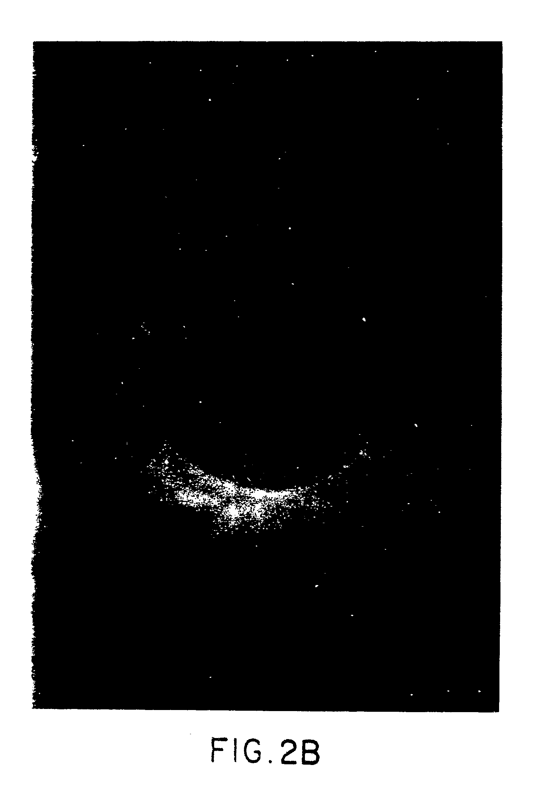

Figures lA and lB are comparative hot stage micrographs of two different polymers and Figures 2A and 2B are films of the same samples exposed to wide angle x-ray diffraction.

Figure lA shows a hot stage photomicrograph of a typical copolymer of the present invention (Example 3 of Table l), Figure lB that of commercially available product (Commercial Sample C of Table 2) believed to be a purified atactic-by-product polymer.

The copolymers preferably exhibit no significant crystallinity under wide angle X-ray diffraction ("X-Ray Diffraction Methods In Polymer Science", L.E. Alexander, Krieger Publishing Company, Huntington, New York, l979). In these tests the samples are placed between two thin films of Mylar (Trade Mark) and placed at the exit collimator of the X-ray tube. A beam stop is used to block out the primary beam and flat films record the scattered radiation with a sample-to-film distance of 30mm. The presence of no more than 2 concentric rings on the exposed film indicates the presence of no significant polymer crystallinity.

Figure 2A shows an exposed film using the same copolymer of this invention as in Figure lA, while Figure 2B is an exposed film of the same sample as of Figure lB. As seen in Figure 2A, there are no rings present indicating an amorphous nature of the polymer sample, while in Figure 2B there are 4 clearly defined rings, which indicate a high degree of crystalline order of the sample.

The polymer according to the invention has a very low heat of fusion, typically less than about 0.6 cal/g (2.5 J/g), as determined by Differential Scanning Calorimetry techniques (DSC), a further indication of the amorphous nature of the polymer and the lack of significant crystallinity in the polymer structure.

The present invention also provides a process for the production of a substantially amorphous copolymer which comprises polymerizing from 70 to 90 wt % propylene and from 30 to 10 wt % ethylene at a temperature of from 130°F (54°C) to 175°F (79°C) and at a reactor pressure sufficient to maintain propylene in a liquid phase, in the presence of from 0.7 to 3.0 mol % hydrogen based on the monomer feed to the process, in the presence of a catalyst comprising:

(a) a solid catalyst component obtainable by co-comminuting a magnesium halide support base and an aluminum trihalide in a molar ratio of 8:0.5 to 8:3.0 in the absence of electron donor and co-comminuting the product obtained with a titanium tetrahalide in the absence of electron donor to provide a solid catalyst component in which the molar ratio of magnesium halide to titanium tetrachloride is from 8:0.4 to 8:1; and

(b) a co-catalyst component comprising a mixture of from 15 to 90 mol % of a trialkylaluminum compound and from 85 to 10 mol % of an alkylaluminum halide having at least one halide per molecule, wherein each alkyl group of the trialkylaluminum and alkylaluminum halide, which alkyl groups may be identical or different, contains from 1 to 9 carbon atoms to provide an Al:Ti ratio in the co-catalyst component of from 50:1 to 600:1 the above mol%s being relative to the total amount of co-catalyst component,

and recovering a substantially amorphous, random copolymer having a tacticity index m/r of from 3 to 4 as determined by $^{13}C$ NMR spectra.

Although the polymerization can be carried out in a batch reactor, it is preferred to utilize a continuous process to achieve the most random incorporation of the monomers.

The pressure is preferably from 400 psig (2755 kPa) to 550 psig (3792 kPa). The preferred temperature is from 150 to 160°F (66°C to 71°C).

Hydrogen is added to the polymerization reactor to control the polymer molecular weight and other properties and is preferably present in a concentration of from 7 to 10 times the amount conventionally used in the manufacture of isotactic polymers. Moreover, as the ethylene content of the copolymer is increased it is necessary to increase the hydrogen concentration in the reactor to maintain a constant melt viscosity. As an example, for a 100% increase in ethylene content, a 50 to 150% increase in hydrogen concentration is required. The concentration of hydrogen in the total feed to the reaction zone is generally from 0.7 to 3.0 mol %, and is preferably from 1.2 to 2.5 mol %.

The specific catalyst composition contains a solid, supported catalyst component and an organoaluminum co-catalyst component. The supported catalyst component comprises a titanium tetrahalide mixed with an enhanced support comprising a magnesium halide and an aluminum trihalide. The molar ratio of the magnesium halide to the aluminum trihalide is from 8:0.5-8:3.0, preferably from 8:1.0-8:1.5.

The molar ratio of the magnesium halide to the titanium tetrahalide is from 8:0.1-8:1.0, preferably from 8:0.4-8:0.6. A critical feature of the solid supported catalyst component is that no electron donor compounds are used in any of the catalyst manufacturing steps. Additionally, the polymerization process using the catalyst should be carried out in the absence of electron donors. The preferred halide is chlorine.

Any of the general methods described in USA 4,347,158 or USA 4,555,496 can be used to prepare the solid supported catalyst component, except that these methods must be modified to exclude the use of electron donor compounds. Briefly, the modified method involves co-comminuting a magnesium halide support base and an aluminum trihalide in the absence of electron donor and co-comminuting the product obtained with a titanium tetrahalide in the absence of electron donor.

The solid catalyst component is used in conjunction with an organoaluminum co-catalyst, which is a mixture of from 15 to 90 mol % of a trialkylaluminum and from 85 to 10 mol % of an alkylaluminum halide having at least one halide per molecule, wherein each alkyl group of the trialkylaluminum and alkylaluminum halide, which may be identical or different, contains from 1 to 9 carbon atoms. The preferred halide is chloride and the alkyl groups are preferably ethyl groups. The invention will be described hereinafter in connection with the preferred catalyst system, although it will be appreciated that a reference to a specific oatalyst or catalyst component encompasses a reference to all catalysts or catalyst components as defined above. The above mol %s are relative to the total amount of co-catalyst component. If the co-catalyst contains less than 15% triethylaluminum the polymer productivity is drastically reduced. Diethylaluminum chloride alone completely fails to promote polymerization. At higher than 90 mol % some of the physical properties of the polymer produced may be affected in an undesirable manner. The diethylaluminum chloride is not used to promote polymerization but, very importantly, to impart to the catalyst system the ability to produce a polymer with desirable properties. The preferred co-catalyst is a mixture comprising from 40 to 60 mol % triethylaluminum and from 60 to 40 mol % diethylaluminum chloride. The molar ratio of total organoaluminum co-catalyst to titanium-containing co-catalyst component, i.e. the Al/Ti atomic ratio, is from 50:l to 600:l, preferably from 90:l to 300:l. The catalyst can incorporate propylene units in the polymer with little or no control of the stereochemistry, and can also incorporate ethylene units as randomly as possible to provide maximum disorder in the polymer chain.

The polymerization is preferably carried out in a stirred reactor having an average residence time of from l hour to 3 hours. Sufficient catalyst quantities are preferably fed to the reactor to produce a polymer content in the reactor slurry of from 30 wt % to 60 wt %. The reactor effluent is withdrawn from the reactor, and unreacted monomer and hydrogen are flashed from the product polymer.

Various additives can be incorporated into the polymer, such as antioxidants, U.V. stabilizers and pigments.

The copolymers of the present invention have excellent properties making them useful in a variety of applications, such as for adhesives, caulking and sealing compounds or roofing compositions. By varying the ethylene content in the polymer and hydrogen addition to the reactor, it is possible to tailor the properties of the polymer for any desired application. The important product properties include melt viscosity, ring and ball softening point, needle penetration and open time.

The melt viscosity at $375°F$ ($191°C$) may be determined by ASTM test method D-3236 using a Brookfield RVT Viscometer (Trade Mark) and a No. 27 spindle. Hydrogen is used to control the molecular weight of the polymer and thus its melt viscosity. It has been found that at increased ethylene content more hydrogen is required to maintain a certain viscosity level. For hot melt adhesives the desired viscosity range of the polymer is from 1000 to 5000 cps (l to 5 Pas) at $375°F$ ($191°C$), while for other applications, such as for use as a bitumen-modified product, the polymer should preferably have a melt viscosity above 5000 cps (5 Pas), preferably from 10,000 to 25,000 cps (10 to 25 Pas).

The ring and ball softening point determinations are carried out using ASTM E-28 test method. The variables affecting the softening point are ethylene content of the polymer and the triethylaluminum concentration in the organoaluminum co-catalyst used in the polymerization process. A decrease in the ethylene content and diethylaluminum chloride concentration in the co-catalyst both cause an increase in the ring and ball softening point. The preferred range is from $235°F$ to $270°F$ (113 to $132°C$) for the hot melt adhesive application.

Needle penetration is another test which measures the softness of the material, in this case by the resistance to penetration according to ASTM test method D-1321. Typically, the penetration values of the copolymers of the present invention are from 25 to 75 dmm (l dmm = 0.lmm). The same process variables affect this property as in the case of ring and ball softening point.

Perhaps the most important test of a hot melt adhesive is the open time. This test is an indication of the elapsed time available between adhesive application to kraft paper and bonding of a kraft paper laminate. This is a very important property for the user, as he must know how soon after applying the adhesive he must add the second sheet of paper. In this test, an 8 1/2" X 11" (21.6 × 28.0 cm) sheet of kraft paper, rough side-up is taped to a drawdown plate. A polymer sample is heated to $375°F$ ($191°C$) along with a Bird drawdown applicator. When at temperature, the applicator is placed at the top of the kraft paper and a small puddle of molten polymer is poured near the edge. The polymer is drawn into a smooth film, and as soon as the bottom of the paper is reached, a stopwatch is started. At 10 second intervals, precut strips of kraft paper (rough side down, transverse machine direction) are placed across the film and pressed into place with a rubber roller. After the last strip is applied, and a subsequent waiting period of 5 minutes, the strips are removed in a smooth, brisk motion. The open time is defined as the longest time when 90% or more of the fiber remains. The open time is preferably from 10 to 60 seconds.

An additional benefit of the polymers of this invention is that they contain extremely small quantities of catalyst residues because of the very large productivity rates of the specific catalyst used in the polymerization. There is no need to remove these small amounts of catalysts from the polymer.

The following examples further illustrate the invention.

EXAMPLES I - 6 and COMPERATIVE EXAMPLES 7 and 8

Polymers were prepared in large scale continuous pilot plant operations, wherein monomers, hydrogen and catalyst components were separately and continuously charged to a stirred reactor, the total monomer feed rate corresponding to about a 2 hour residence time in the reactor. The organoaluminum compound of the catalyst system was a heptane solution of an equimolar mixture of triethyl-aluminum (TEA) and diethylaluminum chloride (DEAC). The solid supported titanium tetrachloride catalyst component had a titanium content of about 2.5 wt % and was prepared by a modification of the preferred technique disclosed in USA 4,347,158, i.e. modified only in that all process steps were carried out in the absence of any electron donor compounds. The solid catalyst component was pumped into the reactor as a 10 wt % mixture in a blend of petrolatum and mineral oil in a 50/50 weight ratio. The two catalyst components were added at rates directly proportioned to the polymer production rates and in amounts sufficient to maintain the polymer solids concentration in the reactor slurry at values usually in the range between about 40% and about 60%. The catalyst productivity (kg polymer/kg of Ti-catalyst component) was calculated in each case from the polymer slurry withdrawal rate, solids content in the slurry and the titanium catalyst addition rate. The product polymer was separated from unreacted monomer, stabilized with Isonox® 129 and then subjected to testing. Table 1 summarizes the pertinent operating conditions and the results of physical testing. The product characteristics of Examples 1-6 fall within the claimed limits of this invention, while those of Comparative Examples 7 and 8 reflect the insufficient amount of ethylene groups in the copolymers, i.e. high softening point, low needle penetration, high heat of fusion.

Table 2 lists the physical properties of Examples 1-8 and also of fifteen atactic polymers (Commercial Examples A-O) obtained from various manufacturers in the United States, Europe and Asia. Commercial Sample A is a terpolymer of ethylene, propylene and a major proportion of butene-1, while the remaining samples are either propylene homopolymers or ethylene-propylene copolymers. Samples B, C, G and H are believed to have been produced in processes under conditions deliberately selected to yield relatively large concentrations of atactic polymer in the total polymer product. It is further believed that the atactic portions have subsequently been removed from the isotactic by-product by solvent treatment. Samples D-F and I-O are believed to be atactic polypropylene by-products. None of these commercial samples have the physical properties required of the polymer products of this invention.

5

EP 0 251 771 B1

TABLE 1

| EXAMPLE NO. | 1 | 2 | 3 | 4 | 5 | 6 | COMP 7 | COMP 8 |
|---|---|---|---|---|---|---|---|---|
| Reactor Temp. – °F (°C) | 157(69) | 150 (66) | 154(68) | 154 (68) | 157(69) | 142(61) | 155(68) | 155(68) |
| Reactor Press. – psig(kPa) | 456(3119) | 434(2992) | 466 (3213) | 484 (3337) | 491(3385) | 495 (3412) | 448 (3089) | 442 (3047) |
| Propylene – lbs/hr (kg/hr) | 111(50.3) | 111(50.3) | 111 (50.3) | 111 (50.3) | 102 (46.3) | 111 (50.3) | 112 (50.8) | 124 (56.2) |
| Ethylene – lbs/hr (kg/hr) | 8.8(4.0) | 9.0(4.1) | 12.0(5.4) | 12.0 (5.4) | 8.5(3.9) | 12.9 (5.9) | 5.0 (2.3) | —— |
| Hydrogen – lbs/hr (kg/hr) | 0.14(63) | 0.05(23) | 0.06 (27) | 0.10 (45) | 0.06(27) | 0.14 (63) | 0.10 (45) | 0.07 (32) |
| Al/Ti mol ratio | 311 | 289 | 301 | 299 | 263 | 291 | 299 | 533 |
| Reactor Solids – wt % | 60.5 | 47.7 | 51 | 51 | 32 | 38 | 61 | 59 |
| Productivity – kg / kg Catalyst | 55,420 | 34,390 | 33,520 | 35,500 | 23,950 | 30,260 | 37,440 | 20,680 |
| Ethylene Content – wt % | 12.2 | 13.5 | 14.3 | 15.5 | 17.5 | 25.7 | 4.0 | 0 |
| m/r Ratio ( or ñ) | 3.1 | 3.3 | 3.8 | 3.7 | 3.7 | 3.5 | 3.2 | 3.3 |
| Average Granule Length – μm | 15 | 20 | 12 | 18 | 25 | 15 | 38 | 50 |
| No. of Rings (Wide angle X-ray) | 0 | 2 | 0 | 2 | 0 | 0 | 1 | 4 |
| $\Delta H_F$ – cal/g (DSC) (J/g) | 0.50 (2.1) | 0.50(2.1) | 0.27 (1.1) | 0.33(1.4) | 0.16(0.7) | 0.00 (0) | 1.79 (7.5) | 4.37 (18.3) |
| Melt Viscosity @ 375°F (191°C)-cps (Pas) | 3,000 (3) | 15,000 (15) | 7,750 (7.8) | 3,780(3.8) | 9,210 (9.2) | 7,900 (7.9) | 2,100 (2.1) | 2,800 (2.8) |
| Open Time – secs | 10 | 20 | 20 | 30 | 20 | >60 | <10 | 0 |
| Ring and Ball Softening Point – °F (°C) | 266(130) | 257 (125) | 252(122) | 251(122) | 253 (123) | 237(114) | 279(137) | 304(151) |
| Needle Penetration – 0.1 mm | 37 | 28 | 43 | 45 | 41 | 71 | 17 | 8 |

# TABLE 2

| PRODUCT PROPERTY | Ethylene wt% | m/r or ñ | Granule Length μm | No of Rings X-ray | ΔH_F - cal/g (J/g) | Melt Visc. @375°F(191°C) cps (Pas) | Open Time Secs | Soft Pt. °F(°C) | Needle Pen. 0.1 mm |
|---|---|---|---|---|---|---|---|---|---|
| Example 1 | 12.2 | 3.1 | 15 | 0 | 0.50(2.1) | 3,000(3) | 10 | 266 (130) | 37 |
| 2 | 13.5 | 3.3 | 20 | 2 | 0.50(2.1) | 15,000(15) | 20 | 257 (125) | 28 |
| 3 | 14.3 | 3.8 | 12 | 0 | 0.27(1.1) | 7,750(7.8) | 20 | 252 (122) | 43 |
| 4 | 15.5 | 3.7 | 18 | 2 | 0.33(1.4) | 3,780(3.8) | 30 | 251 (122) | 45 |
| 5 | 17.5 | 3.7 | 25 | 0 | 0.16(0.7) | 9,210(9.2) | 20 | 253 (123) | 41 |
| 6 | 25.7 | 3.5 | 15 | 0 | 0.00(0) | 7,900(7.9) | >60 | 237 (114) | 71 |
| Comp. 7 | 4.0 | 3.2 | 38 | 1 | 1.79(7.5) | 2,100(2.1) | <10 | 279 (137) | 17 |
| Comp. 8 | 0 | 3.3 | 50 | 4 | 4.37(18.3) | 2,800(2.8) | 0 | 304 (151) | 8 |
| Commercial Sample A* | 5.0 | --- | 0 | 4 | 0.10(0.4) | 22,000(22) | 60 | 176 (80) | 13 |
| B | 8.6 | 2.1 | 33 | 2 | 0.10(0.4) | 11,000(11) | 40 | 284 (140) | 29 |
| C | 3 | 2.1 | 45 | 4 | 1.04(4.4) | 1,300(1.3) | >60 | 287 (142) | 43 |
| D | 8.0 | 1.6 | 0 | 5 | 0.00(0) | 250(0.3) | --- | --- | --- |
| E | 22.1 | 49.0 | 5 | 2 | 0.93(3.9) | >500,000(500) | --- | --- | --- |
| F | 17.1 | 99.0 | 18 | 4 | 0.75(3.1) | 56,000(56) | --- | --- | --- |
| G | 0 | 2.7 | 90 | 2 | 3.81(16.0) | 2,000(2) | 5 | 314 (157) | 10 |
| H | 0 | 2.9 | 130 | 2 | --- | 2,400(2.4) | 0 | 295 (146) | 12 |
| I | 0 | 2.1 | 98 | 3 | 0.44(1.8) | 500(0.5) | 0 | --- | --- |
| J | 0 | 2.0 | 18 | 4 | 0.00(0) | 100(0.1) | --- | --- | --- |
| K | 0 | 2.1 | 92 | 2 | 1.38(5.8) | 3,200(3.2) | --- | --- | --- |
| L | 0 | 2.5 | 148 | 3 | 1.12(4.7) | 900(0.9) | --- | --- | --- |
| M | 0 | 2.7 | 170 | 7 | 4.21(17.6) | 4,300(4.3) | --- | --- | --- |
| N | 0 | 2.5 | 75 | 7 | 0.50(2.1) | 250(0.3) | --- | --- | --- |
| O | 0 | 1.9 | 40 | 4 | 0.25(1.0) | 350(0.4) | --- | --- | --- |

* Terpolymer ethylene/propylene/butene - 1

EP 0 251 771 B1

EXAMPLE 9

The experiment was performed in a I-liter, jacketed autoclave equipped with a magnetically coupled stirrer. The temperature of the autoclave was controlled by the use of a mixture of equal weights of glycol and water as the heat transfer fluid flowing through the jacket. The temperature of this fluid was controlled by a microprocessor whose temperature indicator was an iron/constantin thermocouple inside the autoclave. With lO this system, set point temperature could be maintained ± 0.2°C. The monomers were polymerization grade, 99.9% pure, and were also passed through molecular sieve beds, as well as beds of copper catalyst for oxygen removal, prior to use. Hydrogen was ultra-high purity, 99.99% and used as is. Aluminum alkyl solutions were purchased as 25% W/W in normal heptane and were used as is. One wt % catalyst slurry was prepared in degassed mineral oil using a catalyst of the same type as that of in Examples I-8. Prior to use, the autoclave was heated to 90°C with a slow nitrogen purge for 30 minutes. After cooling to 30°C, the nitrogen atmosphere was replaced with a propylene purge. Alkyl solutions and catalyst slurry were prepared in septum vials in dry boxes (nitrogen atmosphere), purged with nitrogen upon removal, and pressurized slightly to avoid contamination. Alkyl solutions and catalyst slurry were introduced into the reactors using hypodermic syringes, previously cleaned with de-ionized water, dried at l2O°C, and purged with nitrogen prior to use. 0.34 ml TEA, 0.34 ml DEAC (Al - l.77 $\times$ lO$^{-3}$ mole/l), and 0.58 ml of l% W/W catalyst slurry (2.5% W/W titanium content) were added to the autoclave. Hydrogen was added to equal a partial pressure of 70 psig (483 kPa). 0.6 liters of propylene was introduced using a sight gauge and nitrogen pressure. The reactor content was heated to 60°C and maintained while stirring at 500 rpm. As soon as the temperature stabilised at 60°C (5-lO minutes), ethylene was added to the reactor to maintain a constant overpressure of 50 psig (345 kPa) greater than the reactor pressure. After I hour, the temperature was lowered and excess propylene vented. The ethylene-propylene copolymer was dried under vacuum at 40°C overnight.

Table 3 lists the pertinent physical properties of the product of Example 9 .

## TABLE 3

| EXAMPLE NO | 9 |
|---|---|
| Ethylene - wt % | 21.1 |
| m/r | 3.3 |
| Average Granule Length $\mu$m | 22 |
| No. of Rings - X-ray | 0 |
| $\Delta H_F$-cal/g (J/g) | 0.00 (0) |
| Melt Viscosity @ 375°F (191°C) cps (Pas) | 2810 (2.8) |
| Open Time - secs | >60 |
| Softening Point - °F(°C) | 260 (127) |
| Needle Penetration - 0.1 mm | 71 |
| Catalyst Efficiency kg/g | 41.2 |

COMPARATIVE EXAMPLES 10 AND 11

These examples were carried out using the procedure described in connection with Example 9 except for the alkyl co-catalyst addition. In Example 10 0.68 ml TEA was used exclusively while in Example 11 the same amount of DEAC only was added. Table 4 lists the pertinent data of these comparative examples.

### TABLE 4

| EXAMPLE NO | COMP. 10 | COMP. 11 |
|---|---|---|
| Co-Catalyst | | |
| TEA | 100% | ---- |
| DEAC | ---- | 100% |
| Catalyst Efficiency kg/g | 40.0 | 0.0 |
| Ethylene - wt % | 18.1 | ---- |
| m/r | 4.2 | ---- |
| Melt Viscosity @ 375$^{\circ}$F (191$^{\circ}$C) cps (Pas) | 3700(3.7) | ---- |
| Open Time - secs | >60 | ---- |
| Softening Point - $^{\circ}$F($^{\circ}$C) | 275(135) | ---- |
| Needle Penetration - 0.1 mm | 43 | ---- |

As seen from the above data, the use of l00% TEA instead of a mixture of TEA and DEAC (as in Example 9) resulted in a higher m/r ratio of the polymer product. Also, the softening point and needle penetration values were affected in a detrimental way. The use of l00% DEAC as co-catalyst resulted in no formation of polymer.

**Claims**

1. A substantially amorphous random copolymer consisting of from 10 wt % to 30 wt % of units derived from ethylene and from 90 to 70 wt % of units derived from propylene, the copolymer having a tacticity index m/r of from 3 to 4 as determined by $^{13}$C NMR spectra.

2. A copolymer according to claim 1 exhibiting a birefringent structure of spherulite granules by hot stage microscopy, the average length of the granules being from 15 to 50 micrometers.

3. A copolymer according to claim 1 exhibiting no significant crystallinity as determined by the presence of not more than 2 rings under wide angle x-ray diffraction.

4. A copolymer according to claim 1, 2 or 3 having a heat of fusion of less than 0.6 cal/g.(2.5 J/g).

5. A copolymer according to any one of claims 1 to 4 having a melt viscosity of from 1000 to 25,000 cps (1 to 25 Pas) at 375$^{\circ}$F (191$^{\circ}$C).

6. A copolymer according to any of claims 1 to 5 having a ring and ball softening point of from 235$^{\circ}$F- (113$^{\circ}$C) to 270$^{\circ}$F (132$^{\circ}$C).

7. A copolymer according to any one of claims 1 to 6 having a needle penetration in the range of from 25 to 75 dmm.

8. A copolymer according to any one of claims 1 to 7 having an open time of from 10 to 60 seconds.

9. A process for the production of a substantially amorphous copolymer according to claim 1 which comprises polymerizing from 70 to 90 wt % propylene and from 30 to 10 wt % ethylene at a temperature of from 130°F (54°C) to 175°F (79°C) and at a reactor pressure sufficient to maintain propylene in a liquid phase, in the presence of from 0.7 to 3.0 mol % hydrogen based on the monomer feed to the process, in the presence of a catalyst comprising:

(a) a solid catalyst component obtainable by co-comminuting a magnesium halide support base and an aluminum trihalide in a molar ratio of from 8:0.5 to 8:3.0 in the absence of electron donor and co-comminuting the product obtained with a titanium tetrahalide in the absence of electron donor to provide a solid catalyst component in which the molar ratio of magnesium halide to titanium tetrachloride is from 8:0.4 to 8:1; and

(b) a co-catalyst component comprising a mixture of from 15 to 90 mol % of a trialkylaluminum compound and from 85 to 10 mol % of an alkylaluminum halide having at least one halide per molecule, wherein each alkyl group of the trialkylaluminum and alkylaluminum halide, which alkyl groups may be identical or different, contains from 1 to 9 carbon atoms, the mol %s being relative to the total amount of co-catalyst component,

the molar ratio of co-catalyst component (b) to solid catalyst component (a) providing an Al/Ti atomic ratio of 50:1 to 600:1,

and recovering a substantially amorphous, random interpolymer having a tacticity index m/r of from 3 to 4 as determined by $^{13}C$ NMR spectra.

10. A process according to claim 9 wherein each halide is chloride, each alkyl is an ethyl group and the alkylaluminum halide is diethylaluminum chloride.

11. A process according to claim 9 or 10 wherein the reactor pressure is from 400 psig (2758 kPa) to 550 psig (3792 kPa) and the temperature is from 150°F to 160°F (66°C to 71°C).

12. A process according to any one of claims 9 to 11 wherein the molar ratio of magnesium halide to aluminum halide in the solid catalyst component is from 8:1 to 8:1.5.

13. A process according to any one of claim 9 to 12 wherein the molar ratio of magnesium halide to titanium tetrahalide in the solid catalyst component is from 8:0.4 to 8:0.6.

14. A process according to any one of claim 9 to 13 wherein the trialkylaluminum content of the co-catalyst mixture is from 40 to 60 mol %.

15. A process according to any one of claims 9 to 14 wherein the Al:Ti ratio is from 90:1 to 300:1.

16. A process according to any one of claims 9 to 15 wherein the hydrogen is present in amount of from 1.2 to 2.5 mol % based on the total monomer feed to the process.

17. A process according to any one of claims 9 to 16 which is carried out under continuous conditions at an average residence time of from 1 hour to 3 hours.

18. A process according to any one of claims 9 to 17 wherein the solids contents of the reactor slurry is from 30 wt % to 60 wt %.

19. A process according to any one of claims 9 to 18 wherein the hydrogen concentration is increased and the ethylene concentration is increased to provide a constant viscosity product.

**Revendications**

1. Copolymère statistique principalement amorphe constitué de 10 % en poids à 30 % en poids de motifs dérivés d'éthylène et de 90 à 70 % en poids de motifs dérivés de propylène, le copolymère ayant un indice de tacticité m/r de 3 à 4 tel que déterminé d'après le spectre $^{13}C$-RMN.

2. Copolymère suivant la revendication 1, présentant une structure biréfringente de granules de sphérulites à l'examen au microscope à platine chauffante, la longueur moyenne des granules étant de 15 à 50 micromètres.

3. Copolymère suivant la revendication 1, ne présentant pas de cristallinité notable comme déterminé par la présence d'un maximum de 2 noyaux à l'examen par diffraction des rayons X sous un grand angle.

4. Copolymère suivant la revendication 1, 2 ou 3, ayant une chaleur de fusion inférieure à 0,6 cal/g (2,5 J/g).

5. Copolymère suivant l'une quelconque des revendications 1 à 4, ayant une viscosité à l'état fondu de 1000 à 25 000 cps (1 à 25 Pa.s) à 375°F (191°C).

6. Copolymère suivant l'une quelconque des revendications 1 à 5, ayant un point de ramollissement bille et anneau de 235°F (113°C) à 270°F (132°C).

7. Copolymère suivant l'une quelconque des revendications 1 à 6, ayant une pénétration à l'aiguille comprise dans la plage de 25 à 75 dixièmes de millimètre.

8. Copolymère suivant l'une quelconque des revendications 1 à 7, ayant un temps à l'air libre de 10 à 60 secondes.

9. Procédé de production d'un copolymère principalement amorphe suivant la revendication 1, qui consiste à polymériser 70 à 90 % en poids de propylène et 30 à 10 % en poids d'éthylène à une température de 130°F (54°C) à 175°F (79°C) et à une pression du réacteur suffisante pour maintenir le propylène en phase liquide, en présence de 0,7 à 3,0 moles % d'hydrogène sur la base de la charge de monomères introduite dans le procédé, en présence d'un catalyseur comprenant :
(a) un composant de catalyseur solide pouvant être obtenu par division conjointe d'un halogénure de magnésium de support et d'un trihalogénure d'aluminium dans un rapport molaire de 8:0,5 à 8:3,0 en l'absence de donneur d'électrons et division conjointe du produit obtenu avec un tétrahalogénure de titane en l'absence de donneur d'électrons pour obtenir un composant de catalyseur solide dans lequel le rapport molaire de l'halogénure de magnésium au tétrachlorure de titane va de 8:0,4 à 8:1 ; et
(b) un composant cocatalyseur comprenant un mélange de 15 à 90 moles % d'un composé de trialkylaluminium et 85 à 10 moles % d'un halogénure d'alkylaluminium ayant au moins un halogénure par molécule, chaque groupe alkyle du trialkylaluminium et de l'halogénure d'alkylaluminium, dont les groupes alkyle peuvent être identiques ou différents, contenant 1 à 9 atomes de carbone, les pourcentages molaires étant indiqués sur la base de la quantité totale du composant cocatalyseur,
le rapport molaire du composant cocatalyseur (b) au composant de catalyseur solide (a) représentant un rapport atomique Al/Ti de 50:1 à 600:1,
et à recueillir un interpolymère statistique principalement amorphe ayant un indice de tacticité m/r de 3 à 4 tel que déterminé par le spectre de $^{13}$C-RMN.

10. Procédé suivant la revendication 9, dans lequel chaque halogénure est un chlorure, chaque groupe alkyle est un groupe éthyle et l'halogénure d'alkylaluminium est le chlorure de diéthylaluminium.

11. Procédé suivant la revendication 9 ou 10, dans lequel la pression manométrique dans le réacteur va de 400 lb/in² (2758 kPa) à 550 lb/in² (3792 kPa) et la température va de 150°F 0 160-F (66°C à 71°C).

12. Procédé suivant l'une quelconque des revendications 9 à 11, dans lequel le rapport molaire de l'halogénure de magnésium à l'halogénure d'aluminium dans le composant de catalyseur solide va de 8:1 à 8:1,5.

13. Procédé suivant l'une quelconque des revendications 9 à 12, dans lequel le rapport molaire de l'halogénure de magnésium au tétrahalogénure de titane dans le composant de catalyseur solide va de 8:0,4 à 8:0,6.

14. Procédé suivant l'une quelconque des revendications 9 à 13, dans lequel la teneur en trialkylaluminium du mélange formant le cocatalyseur va de 40 à 60 moles %.

15. Procédé suivant l'une quelconque des revendications 9 à 14, dans lequel le rapport Al:Ti va de 90:1 à 300:1.

16. Procédé suivant l'une quelconque des revendications 9 à 15, dans lequel l'hydrogène est présent en une quantité de 1,2 à 2,5 moles % sur la base de la charge totale de monomères introduite dans le procédé.

17. Procédé suivant l'une quelconque des revendications 9 à 16, qui est mis en oeuvre dans des conditions continues en un temps moyen de contact de 1 à 3 heures.

18. Procédé suivant l'une quelconque des revendications 9 à 17, dans lequel la teneur en matières solides de la suspension contenue dans le réacteur va de 30 à 60 % en poids.

19. Procédé suivant l'une quelconque des revendications 9 à 18, dans lequel la concentration en hydrogène et la concentration en éthylène sont élevées, pour offrir un produit à viscosité constante.

**Ansprüche**

1. Im wesentlichen amorphes, statistisches Copolymer, das zu 10 Gew.% bis 30 Gew.% aus von Ethylen abgeleiteten Einheiten und zu 90 bis 70 Gew.% aus von Propylen abgeleiteten Einheiten besteht, wobei das Copolymer einen Taktizitätsindex m/r von 3 bis 4, wie durch $^{13}$C-NMR-Spektren bestimmt, hat.

2. Copolymer nach Anspruch 1, das bei der Mikroskopie in heißem Zustand eine doppelbrechende Struktur aus spherolitischen Körnchen zeigt, wobei die durchschnittliche Körnchenlänge 15 bis 50 μm ist.

3. Copolymer nach Anspruch 1, das keine signifikante Kristallinität zeigt, wie durch das Auftreten von nicht mehr als zwei Ringen bei der Weitwinkelröntgenbeugung bestimmt.

4. Copolymer nach Anspruch 1, 2 oder 3 mit einer Schmelzwärme von weniger als 2,5 J/g (0,6 cal/g).

5. Copolymer nach einem der Ansprüche 1 bis 4 mit einer Schmelzviskosität von 1 bis 25 Pas (1 000 bis 25 000 cps) bei 191°C (375°F).

6. Copolymer nach einem der Ansprüche 1 bis 5 mit einem Ringund Kugelerweichungspunkt von 113°C (235°F) bis 132°C (270°F).

7. Copolymer nach einem der Ansprüche 1 bis 6 mit einer Nadelpenetration im Bereich von 2,5 bis 7,5 mm (25 bis 75 dmm).

8. Copolymer nach einem der Ansprüche 1 bis 7 mit einer offenen Zeit von 10 bis 60 Sekunden.

9. Verfahren zur Herstellung eines im wesentlichen amorphen Copolymeren gemäß Anspruch 1, bei dem 70 bis 90 Gew.% Propylen und 30 bis 10 Gew.% Ethylen bei einer Temperatur von 54°C (130°F) bis 79°C (175°F) und einem Reaktordruck, der ausreicht, das Propylen in einer flüssigen Phase zu halten, in Gegenwart von 0,7 bis 3,0 Mol.% Wasserstoff, bezogen auf das Monomereinsatzmaterial des Verfahrens, und in Gegenwart eines Katalysators polymerisiert werden, der:
a) eine feste Katalysatorkomponente, die durch gemeinsames Zerkleinern einer Magnesiumhalogenidträgerbasis und eines Aluminiumtrihalogenids in einem molaren Verhältnis von 8:0,5 bis 8:3,0 in Abwesenheit eines Elektronendonators und gemeinsames Zerkleinern des erhaltenen Produkts mit einem Titantetrahalogenid in Abwesenheit eines Elektronendonators erhältlich ist und in der das molare Verhältnis von Magnesiumhalogenid zu Titantetrachlorid 8:0,4 bis 8:1 beträgt, und
b) eine Cokatalysatorkomponente umfaßt, die eine Mischung aus 10 bis 90 Mol.% einer Trialkylaluminiumverbindung und 85 bis 10 Mol.% eines Alkylaluminiumhalogenids mit mindestens einem Halogenid pro Molekül umfaßt, wobei jede Alkylgruppe des Trialkylaluminiums und Alkylaluminiumhalogenids, die identisch oder verschieden sein können, 1 bis 9 Kohlenstoffatome enthält, die Mol.% auf die Gesamtmenge der Cokatalysatorkomponente bezogen sind und das molare Verhältnis von Cokatalysatorkomponente (b) zur festen Katalysatorkomponente (a) ein atomares Al/Ti-Verhältnis von 50:1 bis 600:1 liefert,
und ein im wesentlichen amorphes, statistisches Copolymer mit einem Taktizitätsindex m/r von 3 bis 4, wie durch $^{13}$C-NMR-Spektren bestimmt, gewonnen wird.

10. Verfahren nach Anspruch 9, bei dem jedes Halogenid Chlor ist, jedes Alkyl eine Ethylgruppe ist und das Alkylaluminiumhalogenid Diethylaluminiumchlorid ist.

11. Verfahren nach Anspruch 9 oder 10, bei dem der Reaktorüberdruck 2758 kPa (400 psig) bis 3792 kPa (550 psig) beträgt und die Temperatur 66°C bis 71°C (150° F bis 160°F) ist.

12. Verfahren nach einem der Ansprüche 9 bis 11, bei dem das molare Verhältnis von Magnesiumhalogenid zu Aluminiumhalogenid in der festen Katalysatorkomponente 8:1 bis 8:1,5 ist.

13. Verfahren nach einem der Ansprüche 9 bis 12, bei dem das molare Verhältnis von Magnesiumhalogenid zu Titantetrahalogenid in der festen Katalysatorkomponente 8:0,4 bis 8:0,6 ist.

14. Verfahren nach einem der Ansprüche 9 bis 13, bei dem der Trialkylaluminiumgehalt der Cokatalysatormischung 40 bis 60 Mol.% ist.

15. Verfahren nach einem der Ansprüche 9 bis 14, bei dem das Al:Ti-Verhältnis 90:1 bis 300:1 ist.

16. Verfahren nach einem der Ansprüche 9 bis 15, bei dem der Wasserstoff in einer Menge von 1,2 bis 2,5 Mol.%, bezogen auf das gesamte Monomereinsatzmaterial des Verfahrens, vorhanden ist.

17. Verfahren nach einem der Ansprüche 9 bis 16, das unter kontinuierlichen Bedingungen bei einer durchschnittlichen Verweilzeit von 1 Stunde bis 3 Stunden durchgeführt wird.

18. Verfahren nach einem der Ansprüche 9 bis 17, bei dem der Feststoffgehalt der Reaktoraufschlämmung 30 Gew.% bis 60 Gew.% ist.

19. Verfahren nach einem der Ansprüche 9 bis 18, bei dem die Wasserstoffkonzentration erhöht wird und die Ethylenkonzentration erhöht wird, um ein Produkt konstanter Viskosität zu erhalten.

FIG.IA

FIG.IB

FIG.2A

FIG.2B